# EUROPÄISCHE PATENTSCHRIFT

(11) **EP 1 402 656 B1**
(45) Veröffentlichungstag und Bekanntmachung des Hinweises auf die Patenterteilung: **22.04.2009**
(21) Anmeldenummer: 02735079.2
(22) Anmeldetag: 25.05.2002
(51) Int. Cl.: H04B 7/08

(54) **FUNKEMPFANGSSYSTEM MIT MEHREREN ANTENNEN UND MEHREREN EMPFÄNGERN**
RADIO RECEIVER SYSTEM COMPRISING A PLURALITY OF ANTENNAE AND A PLURALITY OF RECEIVERS
SYSTEME RECEPTEUR RADIO A PLUSIEURS ANTENNES ET A PLUSIEURS RECEPTEURS

(30) Priorität: 22.06.2001 DE 10130234
(43) Veröffentlichungstag der Anmeldung: 31.03.2004
(60) Teilanmeldung: 07117009.6
(73) Patentinhaber: ROBERT BOSCH GMBH, 70442 Stuttgart (DE)
(72) Erfinder: KOTTSCHLAG, Gerhard, 31139 Hildesheim (DE); PITZ, Gerhard, 31139 Hildesheim (DE)
(86) Internationale Anmeldenummer: PCT/DE2002/001932
(87) Internationale Veröffentlichungsnummer: WO 2003/001703

(56) Entgegenhaltungen:
- EP-A- 0 967 746
- GB-A- 2 257 605
- US-A- 4 558 291
- US-A- 6 064 865

## Beschreibung

### Stand der Technik

Die Erfindung geht von einem Funkempfangssystem mit mehreren Empfangsantennen und mehreren Empfängern nach der Gattung des unabhängigen Patentanspruchs aus.

Funkempfangssysteme mit mehreren Empfängern für unterschiedliche Funkfrequenzen, auch als Mehrkanal-Funkempfänger bezeichnet, werden aus einer gemeinsamen Antenne oder mehreren Antennen von denen eine jede einem der mehreren Empfängern individuell zugeordnet ist, gespeist. Fällt eine Antenne aus, können die angeschlossenen Empfänger nicht mehr genutzt werden, umgekehrt führt ein Empfängerausfall dazu, dass die angeschlossene Antenne ebenfalls nicht mehr eingesetzt werden kann.

Als Abhilfe und zur Flexibilisierung des Empfangssystems sind zwischen den Antennenausgängen und den Empfängereingängen angeordnete Umschaltmatrizen bekannt, die es ermöglichen, einen jeden Empfänger jeweils eine Empfangsantenne eineindeutig zuzuordnen, also jeden der Empfänger mit genau einer der mehreren Antennen zu verbinden.

Die US-A-6 064 865 offenbart ein Funkempfangssystem mit zwei Empfangsantennen und zwei Empfängern, wobei jedem der zwei Empfänger Antennensignale beider Empfangsantennen über ein Zuordnungsnetzwerk zugeführt sind. Dieses Zuordnungsnetzwerk beinhaltet individuelle Gewichtungen und Phasenverschiebungen für die einzelnen Antennensignale, so dass jedem Tuner eine Summe aus unbeeinflussten Antennensignal einer Antenne und bewerteten Antennensignal der anderen Antenne zugeführt wird.

Die GB-A-2 257 605 offenbart ebenfalls ein Funkempfangssystem mit mehreren Empfangsantennen und mehreren Empfängern, wobei jedem der mehreren Empfängern Antennensignale einer Mehrzahl der Empfangsantennen zugeführt sind.

Die EP-A-0967746 offenbart den Nichtdiverzitätsbetrieb eines Diverzitätsempfänger zum Empfang von Informationen auf alternative Frequenzen.

Ein Funkempfangssystem mit mehreren Empfangsantennen und mehreren Empfängern hat den Vorteil, dass auch bei Ausfall einzelner der mehreren Empfangsantennen, beispielsweise infolge einer Unterbrechung ihrer Antennenleitung, immer noch jedem der angeschlossenen Empfänger das Antennensignal mindestens einer Empfangsantenne zur Auswertung zur Verfügung steht. Dazu ist es vorgesehen, dass jedem der mehreren Empfänger Antennensignale einer Mehrzahl der mehreren Empfangsantennen zugeführt sind.

Sofern die verfügbaren Antennen über vergleichbare Empfangseigenschaften verfügen, sind mit dem Funkempfangssystem weiterhin alle vom Stand der Technik her bekannten Betriebsvarianten, die das vom Stand der Technik bekannte Schaltungskonzept zugrunde legen, bei dem jeder Empfänger mit genau einer Antenne verbunden wird, auch weiterhin möglich. Dies gilt beispielsweise auch für den sogenannten Zwei- oder Mehr-Tuner-Betrieb, bei dem beispielsweise ein erster Tuner bzw. Empfänger auf eine Rundfunkfrequenz abgestimmt wird, über die ein wiederzugebendes Audiosignal übertragen wird, während ein zweiter Tuner bzw. Empfänger auf eine zweite Rundfunkfrequenz abgestimmt wird, über die beispielsweise digital codierte Verkehrsfunkinformationen, beispielsweise nach dem TMC (Traffic Message Channel)-Standard übertragen werden. Darüber hinaus ermöglicht die Erfindung aber auch die Realisierung beispielsweise des Zwei- oder Mehr-Tuner-Betriebs auch für den Fall, dass eine von beispielsweise von zwei Empfangsantennen defekt ist oder nicht alle Tuner- bzw. Empfängereingänge mit einer eigenen Antenne beschaltet sind. In diesem Falle werden allen angeschlossenen Empfängern automatisch die Signale der angeschlossenen Antennen zugeführt. Somit ist beispielsweise auch im Falle des Ausfalls einer von zwei Empfangsantennen ein Zwei- oder Mehr-Tuner-Betrieb mit beispielsweise, wie oben beschrieben, einem ersten Tuner als Vordergrund- und einem zweiten Tuner als Hintergrundempfänger ohne jegliche Umschaltmaßnahme möglich.

Die Erfindung wird durch den Gegenstand des Anspruchs 1 definiert.

Vorteilhafte Ausgestaltungen und Weiterbildungen der Erfindung sind in den abhängigen Ansprüchen angegeben.

Gemäss einer vorteilhaften Ausführungsform der Erfindung ist jedes der einem der mehreren Empfänger zugeführten Antennensignale einer individuellen Bewertung unterworfen. Die individuelle Bewertung kann vorteilhafterweise eine Verstärkung oder Dämpfung und/oder eine Phasenverschiebung der Antennensignale umfassen.

Im sogenannten Gleichkanal-Betrieb, wenn also eine Mehrzahl der oder alle Empfänger auf dieselbe Rundfunkfrequenz abgestimmt sind, kann durch eine geeignete Steuerung der Phasenverschiebungen eine Richtantenne nachgebildet werden. Eine solche Richtantenne zeigt einen Antennengewinn gegenüber einer Einzelantenne, zudem ist mit geeigneter Veränderung der Bewertung der Antennensignale, insbesondere der Phasenverschiebungen, die Empfangscharakteristik bzw. Empfangsrichtung der virtuellen Richtantenne einstellbar.

Bei Einsatz des Erfindung in mobilen Funkempangssystemen, wie beispielsweise Autoradios, ist die Richtcharakteristik der virtuellen Richtantenne durch geeignete Steuerung der Bewertungsparameter, beispielsweise durch einen adaptiven Algorithmus, an die Empfangsbedingungen, insbesondere an Senderstandorte, anpaßbar. Insbesondere kann die Richtcharakteristik stets zum Empfang des Signals eines bestimmten Sender(standort)s nachgeführt werden.

Anstelle einer Veränderung der Bewertungsparameter, wie Verstärkungsfaktor (Verstärkung oder Dämpfung) und/oder Phasenverschiebung, kann die Richtcharakteristik der virtuellen Richtantenne durch Signalbearbeitung in nachfolgenden Stufen der Empfänger, insbesondere durch geeignete Algorithmen in einem oder mehreren Signalprozessoren (DSP) erfolgen. Vorteilhaft ist hierbei, daß das erfindungsgemäße Funkempfangssystem mit konstanten Bewertungselemente und daher einfachen Bauelementen aufgebaut werden kann.

Weiterhin ist im Gleichkanal-Betrieb auch ein Antennen-Diversity-Betrieb darstellbar. Dazu wird für jeden geschlossenen Empfänger für jedes Antennensignal eine individuelle Verstärkung und insbesondere Phasenverschiebung zugeordnet, so dass jeder angeschlossene Empfänger ein anderes Gemisch an Antennensignalen erhält. Mittels eines geeigneten Regelalgorithmus wird diejenige der angeschlossenen Empfangsantennen ausgewählt, deren Antennensignal den bestmöglichen Rundfunkempfang ermöglicht. Die Auswahl der Empfangsantenne erfolgt durch geeignete Steuerung der Verstärkungs- bzw. Dämpfungswerte der zugeordneten Bewertungen.

### Zeichnungen

Ausführungsbeispiele der Erfindung sind in den Figuren dargestellt und werden nachfolgend näher erläutert.

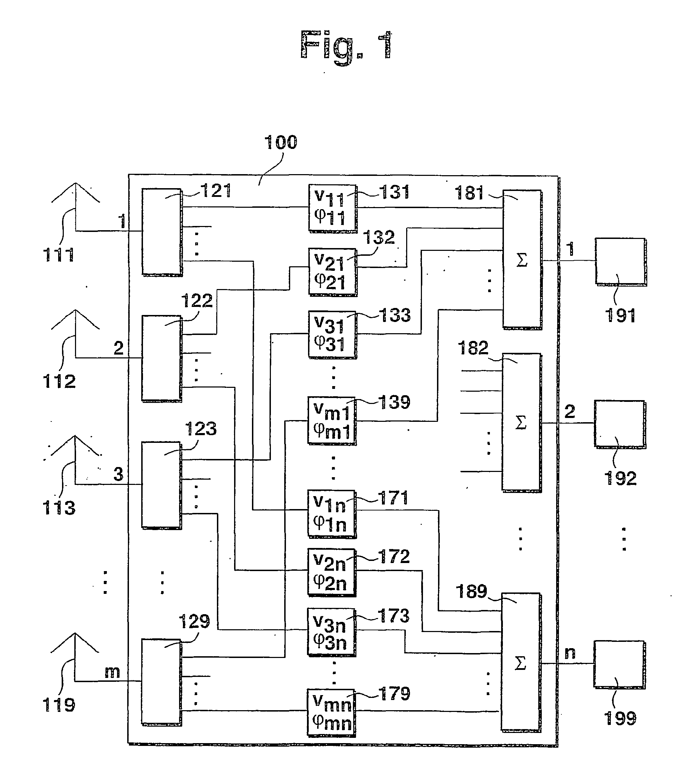

Es zeigen
Figur 1 ein Blockschaltbild eines erfindungsgemäßen Funkempfangssystems mit einer Anordnung zur Verbindung einer Mehrzahl von Empfangsantennen mit einer Mehrzahl von Empfängern,
Figur 2 ein konkretes Beispiel für den Fall zweier Empfangsantennen.und zweier damit zu verbindender Empfangsteile und
Figur 3 ein weiteres Ausführungsbeispiel zur Verbindung zweier Empfangsantennen mit zwei Empfängern.

### Beschreibung der Ausführungsbeispiele

Die Erfindung wird nachfolgend am Beispiel eines mobilen RundFunkempfangssystems, hier eines zum Empfang von frequenzmodulierten (FM) Ultra-Kurz-Wellen-(UKW)-Rundfunksignalen ausgebildeten Autoradiogeräts, beschrieben. Dies ist nicht im Sinne einer Einschränkung der Erfindung zu verstehen, vielmehr ist diese allgemein auf Funkempfangssystem mit mehreren Empfangsantennen und mehreren Empfängern, anwendbar.

Das erfindungsgemäße Autoradio umfaßt eine Mehrzahl von Empfängern 191, 192, ..., 19n. Jeder der genannten Empfänger 191 bis 19n ist mittels eines zugehörigen Abstimmsteuersignals 171, 172, ..., 17n, die in der Figur zu einem Abstimmsteuersignal 170, das von einer Steuerung 110 erzeugt wird, zusammengefaßt sind, auf eine gemeinsame oder mehrere voneinander verschiedene Fundfunkfrequenzen abstimmbar. Den genannten Empfängern 191 bis 19n sind Antennensignale einer Mehrzahl von Empfangsantennen 111, 112, 113 bis 11m zuführbar. Die Zuordnung bzw. Verteilung der mittels der Empfangsantennen 111 bis 11m empfangenen Rundfunksignale zu den mehreren Empfängern 191 bis 19n erfolgt über eine Zuordnungsanordnung 100.

Eingängen 151, 152, 153 bis 15m der Zuordnungsanordnung 100 sind die an den Empfangsantennen 111, 112, 113 bis 11m anstehenden empfangenen Rundfunksignale, die jeweils aus einem Gemisch von am Empfängerstandort empfangbaren Rundfunkfrequenzen bestehen, zugeführt. Das am ersten Eingang 151 der Zuordnungsanordnung 100 anstehende Rundfunksignal der ersten Empfangsantenne 111 ist einem ersten Antennensignalsplitter 121, nachfolgend kurz Splitter zugeführt, in dem das Antennensignal gleichmäßig auf die Anzahl der angeschlossenen Empfänger, hier n, aufgeteilt wird. Ebenso erfolgt eine Aufteilung des zweiten Antennensignals der zweiten Empfangsantenne 112 auf die n Empfänger 191 bis 19n mittels einen zweiten Splitters 122, die Aufteilung des von der dritten Empfangsantenne 113 zugeführten dritten Antennensignals mittels eines dritten Splitters 123 und die Aufteilung des von der m-ten Empfangsantenne 11m zugeführten Antennensignals mittels eines m-ten Splitters 12m. Ein erstes Ausgangssignal 1211 des ersten Splitters 121, das einen ersten Anteil des von der ersten Empfangsantenne 111 zur Verfügung gestellten Signals darstellt, ist über eine erste Bewertungsschaltung 1311 einer ersten Summierschaltung 181 zugeführt, an deren Ausgang anstehendes Summensignal über den ersten Ausgang 161 der Zuordnungsanordnung 100 dem ersten Empfänger 191 zugeführt ist. Weiterhin ist ein an einem ersten Ausgang des zweiten Splitters 122 anstehender erster Anteil 1221 des Antennensignals der zweiten Empfangsantenne 112 über eine zweite Bewertungsschaltung 1321 einem zweiten Eingang des ersten Summierglieds 181 zugeführt. Weiterhin ist ein erster Anteil 1231 des von der dritten Empfangsantenne 113 dem dritten Splitter 123 zugeführten Antennensignals über eine dritte Bewertungsschaltung 1331 dem ersten Summierglied 181 zugeführt. Schließlich ist ein erster Anteil 12ml, der dem m-ten Splitter entnehmbar ist, und der durch Splittung des Antennensignals der m-ten Empfangsantenne 11m gebildet ist, über eine m-te Bewertungsschaltung 13ml der ersten Summierschaltung 181 zugeführt. Das am Ausgang der ersten Summierschaltung 181 und somit dem ersten Ausgang 161 der Zuorndungsanordnung 100 anstehende erste Antennensummensignal ergibt sich somit als Summe der mittels der Bewertungsschaltungen 1311, 1321, 1331 bis 13ml bewerteten Anteile der Antennesignale der Empfangsantennen 111, 112, 113 bis 11m.

Ebenso ergibt sich das am Ausgang der zweiten Summierschaltung 182 und damit am zweiten Ausgang 162 der Zuorndungsanordnung 100 anstehende zweite Antennensummensignal aus der bewerteten bzw. gewichteten Summe der zweiten Anteile der Antennensignale der ersten Empfangsantenne 111, der zweiten Empfangsantenne 112, der dritten Empfangsantenne 113 und der m-ten Empfangsantenne 11m. Dieses ist dem zweiten Empfänger 192 zugeführt.

Schließlich ist ein n-ter Anteil des Antennensignals der ersten Empfangsantenne 111, der mittels des ersten Splitter 121 aus diesem abgeteilt wird, über eine erste Bewertungsschaltung 131n einer n-ten Bewertungsschaltungsgruppe einer n-ten Summierschaltung 18n zugeführt, der n-te Anteil des Antennensignals der zweiten Empfangsantenne 112 über eine zweite Bewertungsschaltung 132n der n-ten Bewertungsschaltungsgruppe der n-ten Summierschaltung 18n, ein n-ter Anteil des Antennensignals der dritten Empfangsantenne 113 über eine dritte Bewertungsschaltung 133n der n-ten Bewertungsschaltungsgruppe der n-ten Summierschaltung 18n und schließlich der n-te Anteil des Antennensignals der m-ten Empfangsantenne 11m über eine m-te Bewertungsschaltung 13mn der n-ten Bewertungsschaltungsgruppe der n-ten Summierschaltung 18n zugeführt. Die Summe der letzten Anteile der Antennesignale der ersten Empfangsantenne 111, 112, 113 bis 11m, die nach Maßgabe der Bewertungsschaltungen 131n, 132n, 133n bis 13mn bewertet sind, ist an einem n-ten Ausgang 16n der Zuordnungsanordnung 100 abnehmbar und einem n-ten Empfänger 19n zugeführt.

In den Bewertungsschaltungen 1311, 1321, 1331 bis 13ml und 131n, 132n, 133n bis 13mn werden die zugeführten Antennensignale, die durch Splittung 121, 122,123 bis 12m aus dem zugeführten Antennensignalen abgeleitet sind, jeweils mit einer individuellen Phasenverschiebung 11, 21, 31, bis m1, ···, 1n, 2n, 3n bis mn versehen. Ergänzend oder alternativ können die den Bewertungsschaltungen zugeführten Antennensignale jeweils mit einem individuellen Verstärkungsfaktor v₁₁, v₂₁, v₃₁, ..., vₘ₁, ..., v₁ₙ, v₂ₙ, v₃ₙ, ..., vₘₙ gewichtet, also individuell verstärkt oder gedämpft werden.

Somit ergeben sich die den Empfängern 191, 192 bis 19n zugeführten Antennensummensignale als Überlagerung individuell verstärkter oder gedämpfter und/oder phasenverschobener Antennensignale der Empfangsantennen 111, 112, 113 bis 11m.

Gemäss einer vorteilhaften Ausführungsform der Erfindung ist es vorgesehen, dass sowohl die Verstärkungsfaktoren der einzelnen Bewertungsschaltungen, als auch deren Phasenverschiebungen mittels von der Steuerung 110 erzeugter Steuersignale 1411, 1421, 1431, ..., 14m1, ..., 141n, 142n, 143n, ... 14mn, die in der Figur zu einem Bewertungsschaltungssteuersignal 140 zusammengefaßt sind, vorgegeben.

Mit der beschriebenen Anordnung kann beispielsweise im sogenannten Gleichkanal-Betrieb, wenn also sämtliche oder zumindest eine Teilmenge mehrerer der angeschlossenen Empfänger 191 bis 19n auf dieselbe Empfangsfrequenz abgestimmt ist, beispielsweise eine Richtantenne zum gezielten Empfang einer von einem bestimmten Sender abgestrahlten Rundfunkfrequenz nachgebildet werden. Eine solche Richtantenne weist gegenüber einer omnidirektionalen Empfangsantenne mit ringsum konstanter Empfindlichkeit einen Antennengewinn auf, der die Steigerung der Empfangsqualität einer gewünschten Empfangsfrequenz ermöglicht. Insbesondere ist es weiterhin möglich, besonders im Falle eines beweglichen Empfängers, beispielsweise mittels eines geeigneten adaptiven Algorithmus die Verstärkungsfaktoren und Phasenverschiebungen der Bewertungsschaltungen derart nachzuführen, dass die Richtcharakteristik der virtuellen Richtantenne 111 bis 11m stets auf den Senderstandort, von dem die gewünschte Rundfunkfrequenz abgestrahlt wird, nachgeführt wird. Auch dies ermöglicht gegenüber bisherigen Systemen eine Empfangsqualitätsverbesserung.

Weiterhin kann durch geeignete Auslegung der Steuerungssoftware der Steuerung 110 auch eine automatische Betriebsmodus-Erkennung, wie nachfolgend beschrieben, realisiert werden. Sind mindestens zwei Empfangsantennen 191, 192 angeschlossen, kann einerseits eine Gleichkanal-Empfangsstrategie, wie beispielsweise oben beschrieben, einerseits oder ein Betrieb der Empfänger auf unterschiedlichen Frequenzen, ein sogenannter Vordergrund/Hintergrund-Betrieb, andererseits gewählt werden. Beide Empfangsmodi werden je nach Erfordernissen im Wechsel angewandt. Wenn aber nur eine Antenne 191 angeschlossen ist, beispielsweise infolge einer Unterbrechung einer Antennenzuleitung, ist ein Gleichkanalbetrieb nicht möglich, da dann beide Empfänger dasselbe Antennensignal erhalten. Hier wird vorteilhafterweise permanent im Vordergrund/Hintergrundmodus gearbeitet. Die Erkennung, ob zwei oder mehr Antennen zum Empfang zur Verfügung stehen, erfolgt automatisch, z. B. folgendermaßen.

Nacheinander werden mehrere Sender auf unterschiedlichen, möglichst weit auseinanderliegenden Frequenzen ausgewählt und die Pegel.in den mindestens zwei Empfängern 191, 192 gemessen, Wenn bei allen Frequenzen die Pegeldifferenz zwischen den Empfängern etwa gleich ist und/oder sie sich auch bei mehreren Messungen in gewissen Abständen und/oder bei fahrendem Fahrzeug - ein die Bewegung des Fahrzeugs anzeigendes Signal ist beispielsweise aus dem Tachosignal ableitbar - kaum ändert, so ist davon auszugehen, dass nur eine Antenne angeschlossen ist. In allen anderen Fällen sind mindestens zwei Antennen vorhanden, denn die Pegelunterschiede entstehen durch Addition in verschiedenen Phasenlagen, d. h. für jede Empfangsfrequenz gibt es eine andere Phasenbeziehung. Sie führen zu unterschiedlichen Auslöschungen und Signalüberhöhungen. In diesen Fällen ist Gleichkanalbetrieb zur Nachbildung einer Richtantennenfunktion sinnvoll. Alternativ ist eine Erkennung der Anzahl angeschlossener Antennen über den Stromverbrauch einer Phantomspeisung der Empfangsantennen, sofern Aktivantennen verwendet werden, möglich.

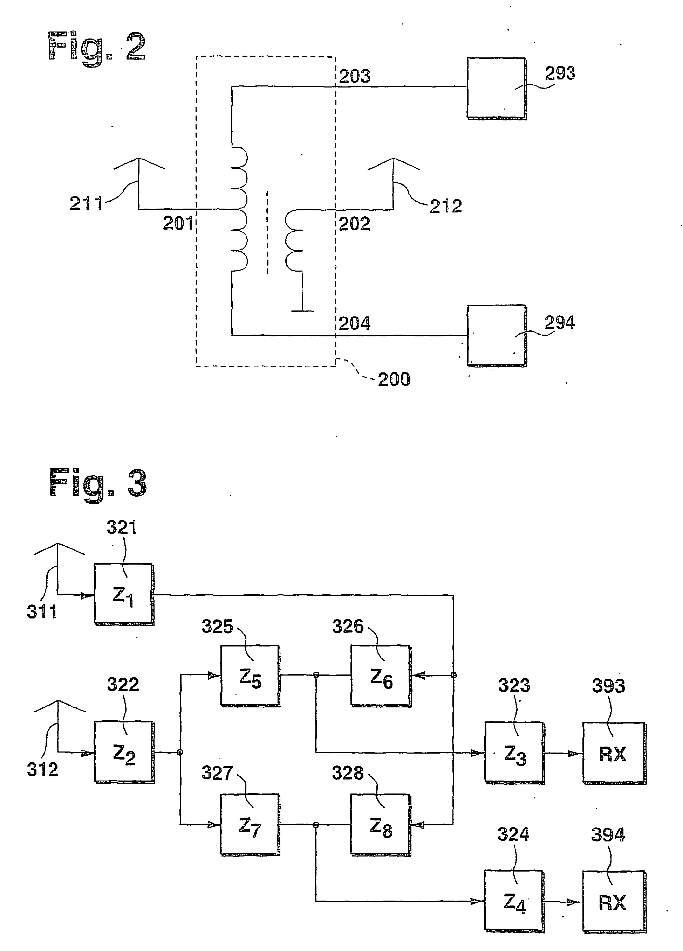

Für ein System mit zwei Empfangsantennen 211, 212 und zwei daran angeschlossenen Empfängern 291, 292 eignet sich die Anordnung gemäss Figur 2. Bei dieser umfaßt die Zuordnungsanordnung 200 einen Transformator 201 mit einem Mittelanzapf an einer Wicklung. Bei Einspeisung eines Antennensignals, hier des Antennensignals der ersten Empfangsantenne 211 über den ersten Antenneneingang 151 an dem Mittelanzapf, wird dieses Signal phasengleich auf zwei Ausgänge 161 und 162 und die daran angeschlossenen Empfänger 291 und 292 aufgeteilt. Das an der zweiten Wicklung 152 des Transformators 201 anliegende Antennensignal der zweiten Empfangsantenne 212 wird um 180° phasenversetzt auf die beiden Ausgänge 161 und 162 der Zuordnungsanordnung 200 abgegeben und damit den beiden angeschlossenen Empfängern 291 und 292 zugeführt.

Diese Zuordnungsanordnung bietet zudem den Vorteil, dass bei geeigneter Wahl des Windungsverhältnisses eine Aufwärtstransformation der Antennenimpedanzen in die Empfängervorkreise der Empfänger 291 und 292 erfolgt, wodurch die Vorkreise der Empfänger mit höherer Güte ausgelegt werden können.

Eine Zuordnungsanordnung 300 ohne Transformator zeigt Figur 3. Die Impedanzen Z₅, Z₆, Z₇, Z₈, die in der Figur mit dem Bezugszeichen 325, 326, 327 und 328 versehen sind, führen die Signalverteilung mit unterschiedlichen Phasenverhältnissen durch, wobei die Aufteilung des von einer zweiten Impedanz Z₂ (Bezugszeichen 322) kommenden Signals einer zweiten Empfangsantenne 312 durch die fünfte Impedanz 325 und siebte Impedanz 327 zu einer anderen Phasenbeziehung führen muss, als die Teilung des von der ersten Impedanz 321 kommenden Signals der ersten Empfangsantenne 311 durch die sechste Impedanz 326 und die achte Impedanz 328. Im einfachsten Fall besteht jedes dieser Elemente (325, 326, 327, 328) aus einem Kondensator oder einer Spule. Die notwendige Phasenbeziehung ergibt sich hierbei, wenn für die vier Impedanzen 325, 326, 327 und 328 drei Spulen und ein Kondensator oder aber eine Spule mit drei Kondensatoren kombiniert werden. Die übrigen Impedanzen 321, 322, 323 und 324 dienen der Impedanzanpassung. Das von der ersten Empfangsantenne 311 zur Verfügung gestellte Antennensignal ist über einen ersten Eingang 351 der Zuordnungsanordnung 300 der ersten Impedanz 321 zugeführt, ebenso ist das zweite Antennensignal der zweiten Empfangsantenne 312 über den zweiten Eingang 352 der zweiten Impedanz 322 der Zuordnungsanordnung 300 zugeführt. Das am Ausgang der dritten Impedanz 323 und damit am ersten Ausgang 361 der Zuordnungsanordnung 300 abnehmbare Antennenmischsignal ist einem ersten Empfänger 391 zugeführt, ebenso ist das Ausgangssignal der vierten Impedanz 324, das am zweiten Ausgang 362 der Zuordnungsanordnung 300 ansteht, einem zweiten Empfänger 392 zur weiteren Verarbeitung zugeführt.

## Patentansprüche

1. Funkempfangssystem mit mindestens zwei Empfangsantennen (111, 112; 211, 212; 311, 312) und mindestens zwei Empfängern (191, 192; 291, 292; 391, 392), mit einer Zuordnungsanordnung (100; 200; 300), die dazu vorgesehen ist, jedem der Empfänger (191, 192; 291, 292; 391, 392) Antennensignale von mindestens zwei der mindestens zwei Antennen (111, 112; 211, 212; 311, 312) zuzuführen, ferner mit einer Steuerung zur Auswertung der Antennensignale, **dadurch gekennzeichnet,**
**dass** die Steuerung dazu ausgebildet ist,
a) nacheinander mehrere Sender auf unterschiedlichen, möglichst weit auseinander liegenden Frequenzen auszuwählen,
b) jeweils die Empfangspegel der über die Frequenzen empfangenen Signale in den mindestens zwei Empfängern (191,192; 291, 292; 391, 392) zu messen, und
c) aufgrund der Messergebnisse festzustellen, ob nur eine der mindestens zwei Antennen (112; 211, 212; 311, 312) an die Zuordnungsanordnung (100; 200; 300) angeschlossen ist, wobei auf den Anschluss nur einer Antenne geschlossen wird, wenn bei allen ausgewählten Frequenzen die Pegeldifferenz zwischen den Empfangssignalen ungefähr gleich ist und/oder sie sich auch bei mehreren Messungen in gewissen Abständen und/oder bei fahrendem Fahrzeug kaum ändert.

2. Funkempfangssystem nach Anspruch 1, **dadurch gekennzeichnet, dass** die Steuerung ferner dazu ausgebildet ist, in allen anderen Fällen auf den Anschluss mindestens zweier Empfangsantennen (112; 211, 212; 311, 312) zu erkennen.

3. Funkempfangssystem nach Anspruch 1 oder 2, **dadurch gekennzeichnet, dass** jedes der einem (191) der mehreren Empfänger (191, 192, ..., 19n) zugeführten Antennensignale einer individuellen Bewertung (1311, 1321, 1331, 13m1, ..., 13mn) unterworfen ist.

4. Funkempfangssystem nach Anspruch 3, **dadurch gekennzeichnet, dass** die Bewertung (1311, ..., 13mn) eine Verstärkung oder Dämpfung (v₁₁, v₂₁, v₃₁, ..., vₘ₁) umfasst.

5. Funkempfangssystem nach Anspruch 3 oder 4, **dadurch gekennzeichnet, dass** die Bewertung (1311, ..., 13mn) eine Phasenverschiebung (ϕ₁₁, ϕ₂₁, ϕ₃₁, ..., ϕₘ₁) umfasst.

6. Funkempfangssystem nach einem der Ansprüche 3 bis 5, **gekennzeichnet durch** eine Auslegung der Bewertung (1311, ..., 13mn) der einem (191) der mehreren Empfänger (191, 192, ..., 19n) zugeführten Antennensignale einer Mehrzahl der mehreren Empfangsantennen (111, 112, 113, ..., 11m) derart, dass sich für den Empfänger (191) eine Antennenrichtcharakteristik ergibt.

7. Funkempfangssystem nach Anspruch 6, **gekennzeichnet durch** eine Steuerung der Bewertung (1311, ..., 13mn) der einem Empfänger (191) zugeführten Antennensignale einer Mehrzahl der mehreren Empfangsantennen (111, 112, 113, ..., 11m) in Abhängigkeit einer gewünschten Antennenrichtcharakteristik.

## Claims

1. Radio receiving system having at least two receiving antennas (111, 112; 211, 212; 311, 312) and at least two receivers (191, 192; 291, 292; 391, 392), having an assignment arrangement (100; 200; 300) which is intended to supply antenna signals from at least two of the at least two antennas (111, 112; 211, 212; 311, 312) to each of the receivers (191, 192; 291, 292; 391, 392), and also having a controller for evaluating the antenna signals, **characterized in that**
the controller is designed
a) to select a plurality of transmitters in succession at different frequencies which are as far apart as possible,
b) to respectively measure the reception levels of the signals received over the frequencies in the at least two receivers (191, 192; 291, 292; 391, 392), and
c) to determine, on the basis of the measurement results, whether only one of the at least two antennas (112; 211, 212; 311, 312) is connected to the assignment arrangement (100; 200; 300), the connection of only one antenna being inferred if the difference in level between the received signals is approximately the same at all selected frequencies and/or if said difference scarcely changes even in the case of a plurality of measurements at certain intervals and/or when the vehicle is moving.

2. Radio receiving system according to Claim 1, **characterized in that** the controller is also designed to detect the connection of at least two receiving antennas (112; 211, 212; 311, 312) in all other cases.

3. Radio receiving system according to Claim 1 or 2, **characterized in that** each of the antenna signals supplied to one (191) of the plurality of receivers (191, 192, ..., 19n) is subjected to an individual assessment (1311, 1321, 1331, 13m1, ..., 13mn).

4. Radio receiving system according to Claim 3, **characterized in that** the assessment (1311, ..., 13mn) comprises amplification or attenuation (v₁₁, v₂₁, v₃₁, ..., vₘ₁).

5. Radio receiving system according to Claim 3 or 4, **characterized in that** the assessment (1311, ..., 13mn) comprises a phase shift (φ₁₁, φ₂₁, φ₃₁, ..., φₘ₁).

6. Radio receiving system according to one of Claims 3 to 5, **characterized by** a design of the assessment (1311, ..., 13mn) of the antenna signals from a multiplicity of the plurality of receiving antennas (111, 112, 113, ..., 11m), which signals are supplied to one (191) of the plurality of receivers (191, 192, ..., 19n), such that an antenna directional characteristic is produced for the receiver (191).

7. Radio receiving system according to Claim 6, **characterized by** control of the assessment (1311, ..., 13mn) of the antenna signals from a multiplicity of the plurality of receiving antennas (111, 112, 113, ..., 11m), which signals are supplied to a receiver (191), on the basis of a desired antenna directional characteristic.

## Revendications

1. Système récepteur radio avec au moins deux antennes de réception (111, 112 ; 211, 212 ; 311, 312) et au moins deux récepteurs (191, 192 ; 291, 292 ; 391, 392), avec un dispositif d'affectation (100 ; 200 ; 300) prévu pour amener à chacun des récepteurs (191, 192 ; 291, 292 ; 391, 392) des signaux d'antenne provenant d'au moins deux des au moins deux antennes (111, 112 ; 211, 212 ; 311, 312), et avec en outre un dispositif de commande pour analyser les signaux d'antenne, **caractérisé en ce que :**
le dispositif de commande est réalisé pour :
a) sélectionner les uns après les autres plusieurs émetteurs à la recherche de fréquences différentes les plus éloignées possible les unes des autres ;
b) mesurer respectivement le niveau de réception des signaux reçus sur les fréquences dans les au moins deux récepteurs (191, 192 ; 291, 292 ; 391, 392) ; et
c) constater en fonction des résultats de mesure si seule une des au moins deux antennes (112 ; 211, 212 ; 311, 312) est raccordée au dispositif d'affectation (100 ; 200 ; 300), le raccordement d'une seule antenne étant conclu lorsque pour toutes les fréquences sélectionnées, la différence de niveau entre les signaux de réception est approximativement constante et/ou varie très peu, et ce également en présence de multiples mesures réalisées à écarts définis et/ou lorsque le véhicule roule.

2. Système récepteur radio selon la revendication 1, **caractérisé en ce que** le dispositif de commande est en outre réalisé pour reconnaître dans tous les autres cas le raccordement d'au moins deux antennes de réception (112 ; 211, 212 ; 311, 312).

3. Système récepteur radio selon la revendication 1 ou 2, **caractérisé en ce que** chacun des signaux d'antenne amenés au récepteur (191) parmi les multiples récepteurs (191, 192, ..., 19n) est soumis à une analyse individuelle (1311, 1321, 1331, 13m1, ..., 13mn).

4. Système récepteur radio selon la revendication 3, **caractérisé en ce que** l'analyse (1311, ..., 13mn) comprend une amplification ou une atténuation (v₁₁, v₂₁, v₃₁, ..., vₘ₁).

5. Système récepteur radio selon la revendication 3 ou 4, **caractérisé en ce que** l'analyse (1311, ..., 13mn) comprend un décalage de phase (φ₁₁, φ₂₁, φ₃₁, ..., φₘ₁).

6. Système récepteur radio selon l'une quelconque des revendications 3 à 5, **caractérisé par** une interprétation de l'analyse (1311, ..., 13mn) des signaux d'antenne amenée au récepteur (191) parmi les multiples récepteurs (191, 192, ..., 19n) d'une pluralité de multiples antennes de réception (111, 112, 113, ..., 11m) de telle sorte qu'on obtient pour le récepteur (191) une caractéristique de direction d'antenne.

7. Système récepteur radio selon la revendication 6, **caractérisé par** un dispositif de commande d'analyse (1311, ..., 13mn) des signaux d'antenne amenés au récepteur (191) d'une pluralité d'antennes de réception parmi la pluralité d'antennes de réception (111, 112, 113, ..., 11m) en fonction d'une caractéristique de direction d'antenne.
